# EUROPEAN PATENT SPECIFICATION

(11) **EP 3 651 871 B1**
(45) Date of publication and mention of the grant of the patent: **11.08.2021**
(21) Application number: 17805094.4
(22) Date of filing: 12.07.2017
(51) Int. Cl.: B01D 17/02, B01D 17/04, B01D 17/00, B02C 18/06, B26D 3/00, B26D 3/11

(54) **COALESCING FILTER FOR WATER/OIL DISPERSE SYSTEM SEPARATION AND METHOD OF COALESCING FILTER PRODUCTION**
KOALESZENZFILTER FÜR EIN SYSTEM ZUR WASSER/ÖL TRENNUNG, UND VERFAHREN ZUR HERSTELLUNG EINES KOALESZENZFILTERS
FILTRE COALESCENT POUR UN SYSTEME DE SÉPARATION D'UNE DISPERSION EAU/HUILE ET MÉTHODE DE PRODUCTION D'UN FILTRE COALESCENT

(43) Date of publication of application: 20.05.2020
(73) Proprietor: ET "VE PE PI - Vesko Pipev", 4600 Velingrad (BG)
(72) Inventor: ZAYTSEV, Nokolay, Konkordievich, Moscow 117513 (RU)
(74) Representative: Georgieva, Lilia Tzvetkova
(86) International application number: PCT/BG2017/000015
(87) International publication number: WO 2019/010548

(56) References cited:
- WO-A1-82/02342
- DE-A1- 19 609 003
- US-A- 4 802 635
- US-A1- 2010 116 751
- US-A1- 2011 192 925

## Description

### Technical Field

The present invention relates to a coalescing filter for water/oil disperse system separation and a method of coalescing filter production, and in particular to water cleaning from hydrocarbons using coalescing medium manufactured from scrap of fabricated rubber products, preferably motor tires.

### Background Art

The environmental problem of oil collecting from water surface is known to promote another topical environmental problem, namely, recovery of scrap of fabricated rubber products, particularly, motor tires, through manufacturing powdered sorbent thereof (GB1384217 (A), NITTAN CO LTD, 19.02.1975). Crumb rubber sorbent for water surface cleaning is featured by high adsorption capacity for crude oil and oil products, reliable extraction of swollen crumb rubber in crude oil and oil products, possibility of oil spill containment, and ensuring coastline protection. The sorbent is distributed over water surface and collected following oil products adsorption. This material may be employed for mixing with asphalt in road construction.

Similar solutions are described in later patent publications EP1279715 A1, KAHL AMANDUS MASCHF, 29.01.2003. Research data are published in literature (e.g. T.F.Tarasova, D.I.Chapalda, Yu.R.Abdrachimov, "Crumb rubber application as an oil spill sorbent; Vestnik OGU, No. 4, April 2007, pp. 151-157; K.S.Shikhaliev, M.Ya. Abdullayeva, "Waste motor tires-based sorbent for water surface cleaning from crude oil and refined products", Journ. "Of Eurasian Union of Scientists", v. 6-2, 2016, pp. 80-81).

Separator filters employing coalescing materials of various composition and structure are also known to be highly efficient in water cleaning from oil sludge. For example, patent RU 2104736, 20.02.1998 describes oleophilic fibrous material, whereas RU2181068, 10.04.2002 describes a filter using granulated coalescing one. A bed constituting volumetrically corrugated polymer fiber non-woven fabric with hydrophobic surface and a layer of hydrophilic super-fine fiber is described in the patent RU2361661 C2, 20.07.2009. Multilayer coalescing filters are described in GB2422148 (A) - Oil/water separation apparatus, 19.07.2006, and in the RU78436 U1, 27.11.2008.

A multitude of various mechanical methods and apparatus is described for recovery of fabricated rubber products that do not relate to crumb rubber production but at the same time not employed as filter active media. These are, first of all, slicing (see, e.g., RU2429122 C1, 20.09.2011), abrasive finishing (DE19506964 A1, 27.06.1996), drilling (RU2605128 C1, 20.12.2016), producing a continuous ribbon out of the tire (RU2337001 C1, 27.10.2008). This means that in tire recovery, traditional techniques and methods known in the material processing industry are employed, which are merely upgraded.

DE3902155 A1, 26.07.1990 describes a waste water purification apparatus for separating low-density liquids from the waste water, wherein the coalescing chamber of the apparatus is filled with loose packing of polyolefin (polyethylene) chips of curved ribbon-like shape of 0.01-0.4 mm thickness, 22-20 mm width, and 4-60 mm length. Such material enables reducing hydraulic resistance of the filter and containment of the sorbent in the coalescence area; however, it has its drawbacks. Polyolefins poorly accumulate oil, rather only providing drops coalescence, which requires a decanter downstream the filter. Besides, polyolefins are rather rigid and are not fit for oil squeezing, as they would get compressed and would be not suitable for further utilization.

WO 82/02342 A1, 22.07.1982 describes an absorbtion column filled with at least one coalescing medium under condition which cause the coalescing medium to sorb at least a portion of the hydrocarbon composition from a mixture containing said hydrocarbon composition. In one embodiment, the coalescing medium is a synthetic elastomer with a thickness of between 0.025 and 0.125 inches (0.64 and 3.18 mm) and cut into strips of 0.5 inches (12.7 mm) wide, each strip having a weight of 0.7-1.0 g. In another embodiment, retort water from modified in situ oil shale retort is filtered and then run through a 1 inch (25.4 mm) diameter absorbtion column containing 10 mesh ground tire scrap rubber to a depth of 27 inches (685.8 mm), the rubber having a total weight 103.5 g. Disadvantages of this coalescing filter are the small specific surface area and law permeability of the coalescing medium, resulting in low efficiency.

DE 196 09 003 A1, 24.10.1996 discloses a coalescing filter for water/oil disperse system separation comprising a chamber with an inlet and outlet, and a chamber cavity filled with at least one coalescing medium, wherein the coalescing medium is a product of mechanical machining, in particular, shaping of synthetic cord-based rubber products into flow strip-shaped chips having longitudinal surface roughness with thickness in the range of 0.1 to 3 mm, and said synthetic cord-based rubber products are worn motor tires. A drawback of this known coalescing filter is that said coalescing filter has low efficiency due to the small specific surface area of the coalescing medium which decreases the oil sorption capability.

### Disclosure of Invention

An object of the present invention is to provide a coalescing filter and coalescing medium for the coalescing filter having an improved efficiency.

Another object of the present invention is to provide a method for producing a new coalescing medium from rubber product scrap, preferably, motor tires, and other rubber scrap types, which coalescing medium is a highly efficient sorbent of oil products and may be employed in streamline filters.

A coalescing filter for water/oil disperse system separation comprising a chamber with an inlet, an outlet and a chamber cavity filled with at least one coalescing medium, wherein the coalescing medium comprises a product of mechanical machining of synthetic cord-based rubber products into flow spiral chips and/or flow strip-shaped chips having longitudinal surface roughness with medium size in the range of 0.1 to 20 µm, through-perforation of the surface, thickness in the range of 0.05 mm to 5 mm, width in the range of 0.05 mm to 20 mm, and length at least 100 mm, wherein said mechanical machining are selected from the group comprising lathe turning, drilling, shaping and milling, and said synthetic cord-based rubber products are selected from the group comprising worn motor tires, tire casings, conveyor belts, scrap rubber hoses and driving belts.

In a preferred embodiment of the present invention the chips may be subjected to silicon-organic or fluoro-organic hydrophobization.

The present invention provides a method of production of coalescing filter through mechanical machining of synthetic cord-based rubber products selected from the group comprising worn motor tires, tire casings, conveyor belts, scrap rubber hoses and driving belts, wherein the method comprises the following operations:
a) producing the coalescing medium (20) by:
   formation of a compressed packet of adjacent individual rubber products,
   processing of said compressed packet through said mechanical machining selected from the group comprising lathe turning, drilling, shaping and milling,
   providing a mutual rotating and translational motion of a cutting tool with respect to said packet at parameters of said mutual rotating and translational motion of the cutting tool with respect to said packet selected basing on the condition of obtaining of flow spiral chip and/or flow strip-shaped chip having longitudinal chip surface roughness with average size of 0.1 to 20 µm, through-perforation of the surface, thickness in the range of 0.05 mm to 5 mm, width in the range of 0.05 mm to 20 mm, and length at least 100 mm, and
b) filling the chamber cavity with the coalescing medium.

Preferably, motor tires and tire casings are cut in the diametrical plane, stacked to form a packet, tensioned and fixed on the rotation axis between two fixing discs.

Conveyor belts, scrap rubber hoses, drive belts may be rolled into a compact cylinder to form the packet, tensioned and fixed on a rotation axis between two fixing discs.

Preferably, the cutting tool is a cutter, or a mill, or a drill.

The technical result is improvement of the efficiency of oil sludge separation due to combination of high specific surface with high hydrodynamic permeability. Loose packing of rubber chips provides for preservation of filter permeability for water, even at high sorbent saturation with oil, and the peculiarity of the material consisting in chip surface self-perforation in the locations of cord filaments cutting enables generating of an additional growth of sorbent surface. Due to rubber deformation and microbreaking in the process of cutting, as well as due to spontaneous separation of cord residues in the course of mechanical machining, an additional porosity arises in the chips, which increases the area of sorbent to medium contact.

Real oil sludges usually contain mechanical admixtures, such as sand, soil, clay, and certain other structures. It has been experimentally established that the coalescing filter for water/oil disperse system, according to the present invention, allows to separate mechanical admixtures from oil component. The oil component is deposited on the surface of chip filter packing and it may be further removed together with the chips in the form of oil tar balls, leaving mechanical admixtures in the water phase.

An important parameter of the scrap tires chip material is the contact angle of wetting; the higher is this angle, the higher is the rubber hydrophobicity, hence, its capability to bind oil, oil products, and fats. It has been experimentally shown that the contact wetting angle of the produced chips constitutes 116° - 135°, whereas for original smooth motor tire rubber this parameter is within the range of 100° - 104°. Approximately the same angle range (about 105°) has polyolefin-polypropylene. Therefore, it follows from these data that smooth rubber binds oil worse than the polypropylene, while the claimed chips provide a drastic increase of the oil sorption capability as well as oriented flow of oil drops stuck to a chip along chip length. This entails even oil distribution along chip length and prevents formation of oil slags impeding the flow of water being cleaned through the filter.

The rubber sorbent swells in oil products, so it adsorbs up to 4-7 kg of oil per 1 kg of rubber; hence, it does not require additional decanter. At normal conditions the rubber is in elastic state, which enables squeezing the saturated sorbent to separate oil products.

Besides, the sorbent saturated with oil may be employed as an additive for road pavement, whereas polyolefins cannot be used for this purpose. The chips provide an additional reinforcing of the asphalt, which strengthens the latter. When using said oil sorbent for water surface cleaning from oil contaminants, the sorbent capacity is the same as that of crumb rubber. However, rubber cutting into chips may prove to be more technological than cutting into crumb rubber, so specific cost per water surface unit cleaning may be reduced.

The additional technical result consists in utilization of environmentally harmful scrap tires through traditional mechanical machining without pyrolysis. The obtained material may be used as a basis for sorbents, as packing and waterproofing material, as a grass paver, soil protection nets and ecoparking material.

### Brief Description of Drawings

Fig. 1 is a flowchart of the coalescing filter;
Fig. 2 is a photograph of the structure of coalescing medium obtained from motor tires protector rubber;
Fig. 3 is a flowchart of the apparatus for tire processing into flow chips;
Fig. 4 is a photograph of the experiment in tire processing into flow chips on the lathe.

### Modes for Carrying Out the Invention

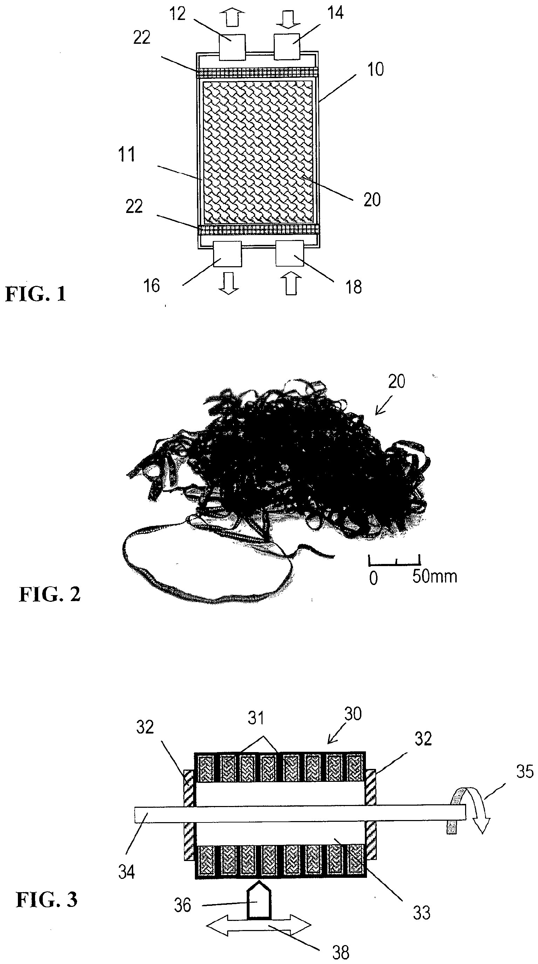

The flowchart of the coalescing filter for water/oil emulsions is shown in Fig. 1. The filter comprises a chamber 10, the chamber cavity 11 of which is connected with pipes 12, 14, 16, 18, the number and purpose of which, input and output ones, may differ depending on the hook-up. The chamber cavity 11 is filled with at least one coalescing medium 20 confined between meshes 22;

Fig. 2 is a photograph of the coalescing medium 20 constituting the flow chips obtained from motor tire protector rubber;

Fig. 3 shows a flowchart of the apparatus for tire processing into the filtering material, flow spiral chips and/or flow strip-shaped chips, wherein: packet 30 of processed tires 31, fixing discs 32 providing fixing and tensioning of the packet 30, reel 33, rotation axis 34, lathe rotation direction 35, lathe cutter 36, cutting direction 38.

Prior to cutting of rubber products into flow chips, the former ones are subjected to preliminary handling. For example, sidewalls and treads of tires can be processed separately. There are presently commercially available specialized machine tools for such preliminary handling, cutting off flat sidewalls from the tread, and other machine tools that tear off metal annular frame from the tire. The nature of preliminary handling depends on particular rubber products to be processed and the machine tool available for further processing. Scrap conveyor belts, for example, are cut in such a manner that allows making a packet through laminar reeling. Car tire treads is cut across in one place so that it looses its stiffness and unwinds in a wide thick ribbon.

Cutting may be performed within the rubber product packet temperatures in the range of -196°C to +250°C. At lower temperatures cutting may be performed at higher rpm.

Following the sorption of oil products from water, soil, oil-spilled sand to be cleaned, or following decomposition of refinery sludge, the chip sorbent becomes saturated with hydrocarbons. These chips may be reclaimed by mechanical squeezing, ultrasonic irradiation, microwave processing or extraction. Due to the rubber nature of the substrate, it is feasible not to reclaim the product saturated with hydrocarbons, but rather use it directly as a bitumen component of asphalt. Another possible option of utilization of the sorbent saturated with oil products is petrochemical processing into light hydrocarbons through thermal or catalytical cracking or coking. Such petrochemical processing is possible without separation of the rubber sorbent, as rubber is also a hydrocarbon.

Oil sorption properties of chips may be additionally enhanced through hydrophobization of the chip surface. For example, the studies showed that treating with liquid or gaseous silicon-organic hydrophobic agents enables increasing the contact wetting angle by 15 - 18°. Treating of the chips with liquid fluoro-organic hydrophobic agents enables increasing of the contact wetting angle by 21° - 30° with respect to untreated chips.

**Example 1.** Obtaining flow spiral chips and/or strip-shaped chips from motor tire casings.

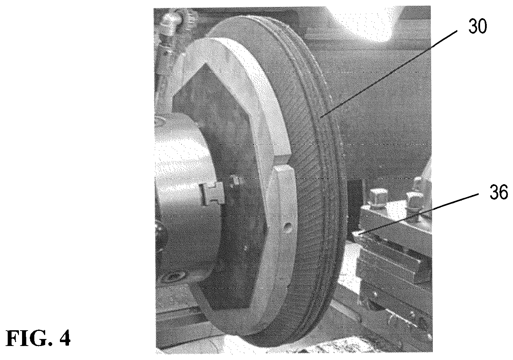

The feedstock rubber products used were car tire casings (tires 31 in Fig. 3) of unknown vehicles with diameter 16" and synthetic filament cord. The tires were cut in the diametrical plane, and then the obtained halves are stacked forming the packet 30. The assembled packet 30 is tensioned and fixed between 0.6 m diameter two uniaxial discs 32 with treaded studs with nuts and washers (conventionally not shown) on the central axis 34. The obtained packet 30 is mounted in the 1K20 lathe chuck (see Fig. 4). Machining was performed with an R65M high-speed steel flat cutter at varying traverse rates and rotation directions at ca. 200 rpm. After grinding off tread contact layer and machining rate selection, the tire was reprocessed into flow spiral chips and/or flow strip-shaped chips.

The machining rate was selected so that to provide high-length chips of not less than 100 mm length with 0.05 - 5 mm thickness, 0.05 - 20 mm width, 5 - 30 mm spiral radius. It was discovered in the course of tests that a lengthy fragment of the chip obtained may comprise both strip-shaped and spiral structures, which in general does not considerably effect its pronounced oil sorption properties. The reel 33 serves for preliminary winding of lengthy products, such as conveyor belts, scrap rubber hoses or drive belts.

Fig. 2 shows a photograph of flow chip actually obtained: the chip bundle consists of several fragments of various lengths, it has total length 380 cm, 3 to 6 mm width, 80 to 200 µm thickness, 0.3 - 0.5 mm cord filament holes with about 10 holes per 10 cm length. Average notch-shaped longitudinal roughness along chip length due to machining with a cutter is 5 to 20 µm along bundle length.

Chips 20 was used to fill the chamber cavity 11 of the filter shown as a flowchart in Fig. 1 employed for filter sorption features testing. The volume of the cavity filled with the sorbent was 5 dm³, the mass of the sorbent was 850 g, filled density 170 g/dm³.

The model test object for filter testing was oil-contaminated water from Krasny Bor landfill in the amount of 5 1. The time of travel under gravity of said oil-contaminated water volume through the filter was 4.5 minutes. Content of hydrocarbons in water following cleaning was less than 50 ppb (determined by IR-spectrometry in an extract with carbon tetrachloride).

The results obtained testify to the fact that guaranteed roughness of thin rubber chips surfaces due to oriented grooves improves oil sorption properties, probably due to emergence of the so-called super-hydrophobic effect.

**Example 2.** Chips chemical treating for increasing hydrophobicity and enhancing of sorption capacity.

2.1. Treating of the chips with liquid silicon-organic hydrophobic agent. 2.0 g of 136-41 liquid silicon-organic hydrophobic agent (according to GOST 10834-76) were added to 100 g of 80 µm-thickness chips. The components were mixed in a horizontally rotating flask for 15 min. Such treating led to contact angle of wetting increasing by 17° with respect to untreated chips.

2.2. Treating of the chips with liquid fluoro-organic hydrophobic agent. 2 g of polyhexafluoropropylene dissolved in 10 ml of Carbogal were added to 100 g of 80 µm-thickness chips. The components were mixed in a horizontally rotating flask for 15min. Then said chips are heated in a baking oven at 110°C for 2 hours. This results in increasing of the contact wetting angle by 21° - 30° with respect to untreated chips.

2.3. Treating of the chips with gaseous silicon-organic hydrophobic agent. 100 g of 80 µm-thickness chips are placed into a desiccator containing 5 ml of trimethylchlorosilane and kept there for several hours at temperature about 100°C. This results in increasing of the contact wetting angle by 18° with respect to untreated chips. It indicates that hydrophobic properties of the sorbent and its capacity to collect oil from water are increased.

Results of the studies conducted with IR spectroscopy methods show that after the cleaning of strongly contaminated water with the claimed oil sorbent the residual content of hydrocarbons is less than 1 ppm. This is also confirmed by the fact that aliphatic hydrocarbons are not detected at all following cleaning with the claimed oil sorbent. The capacity of the sorbent in oil products is 4 to 7 kg of oil per 1 kg of sorbent, which is comparable with the best commercial sorbents.

Therefore, the product of synthetic cord-based rubber products into flow spiral chips and/or flow strip-shaped chips having longitudinal chip surface roughness and claimed parameters enables combining of high sorption characteristics and high specific surface (up to 500 sq.m per 1g) with the ability to be confined with grids and meshes with 0.1- 10 cm mesh sizes, which makes this product a promising basis for ion-exchangers and substrates for ferments and micro-organisms.

The invention may be implemented using the known techniques.

## Claims

1. A coalescing filter for water/oil disperse system separation comprising a chamber (10) with an inlet, an outlet and a chamber cavity (11) filled with at least one coalescing medium (20), **wherein** the coalescing medium (20) comprises a product of mechanical machining of synthetic cord-based rubber products into flow spiral chips and/or flow strip-shaped chips having longitudinal surface roughness with medium size in the range of 0.1 to 20 µm, through-perforation of the surface, thickness in the range of 0.05 mm to 5 mm, width in the range of 0.05 mm to 20 mm and length at least 100 mm, wherein said mechanical machining are selected from the group comprising lathe turning, drilling, shaping and milling, and said synthetic cord-based rubber products are selected from the group comprising worn motor tires, tire casings, conveyor belts, scrap rubber hoses and driving belts.

2. The coalescing filter according to claim 1, **wherein** said chips are subjected to silicon-organic or fluoro-organic hydrophobization.

3. A method of production of coalescing filter according to claim 1 through mechanical machining of synthetic cord-based rubber products selected from the group comprising worn motor tires, tire casings, conveyor belts, scrap rubber hoses and driving belts, **wherein** the method comprises the following operations:
a/ producing the coalescing medium (20) by:
formation of a compressed packet (30) of adjacent individual rubber products,
processing of said compressed packet (30) through said mechanical machining selected from the group comprising lathe turning, drilling, shaping and milling,
providing a mutual rotating and translational motion of a cutting tool (36) with respect to said packet (30) at parameters of said mutual rotating and translational motion of the cutting tool (36) with respect to said packet (30) selected basing on the condition of obtaining of flow spiral chip and/or flow strip-shaped chip having longitudinal chip surface roughness with average size of 0.1 to 20 µm, through-perforation of the surface, thickness in the range of 0.05 mm to 5 mm, width in the range of 0.05 mm to 20 mm, and length at least 100 mm, and
b/ filling the chamber cavity (11) with the coalescing medium (20).

4. The method according to claim 3, **wherein** motor tires and tire casings are cut in the diametrical plane, stacked to form a packet (30), tensioned and fixed on the rotation axis between two fixing discs (32).

5. The method according to claim 3, **wherein** conveyor belts, scrap rubber hoses, drive belts are rolled into a compact cylinder to form the packet (30), tensioned and fixed on a rotation axis (34) between two fixing discs (32).

6. The method according to claim 3, **wherein** the cutting tool (36) is a cutter, or a mill, or a drill.

## Patentansprüche

1. Koaleszenzfilter zur Trennung von dispergierten Wasser/Öl-Systemen, umfassend eine Kammer (10) mit einem Einlaß, einem Auslaß und einem Kammerhohlraum (11), der mit mindestens einem Koaleszenzmedium (20) gefüllt ist, **wobei** das Koaleszenzmedium (20) ein Produkt enthält, das durch mechanische Bearbeitung von synthetische Kautschukprodukten auf Kordelbasis erhalten wird, bis Fließspiralspäne und/oder bandförmige Fließspäne gebildet werden, die eine longitudinale Oberflächenrauhigkeit mit einer durchschnittlichen Abmessung von 0,1 bis 20 µm aufweisen, eine Perforation über die gesamte Oberfläche, eine Dicke zwischen 0,05 mm und 5 mm, eine Breite zwischen 0,05 mm und 20 mm und eine Länge von mindestens 100 mm, wobei die mechanische Bearbeitung aus der Gruppe ausgewählt ist, die Drehen, Bohren, Hobeln und Fräsen umfasst, wobei die synthetische Kautschukprodukten auf Kordelbasis ausgewählt sind aus der Gruppe, die verschlissene Motorreifen, Reifenhüllen, Förderbänder, Abfälle von Gummischläuchen und Antriebsriemen umfasst.

2. Koaleszenzfilter nach Anspruch 1, **wobei** die erwähnten Späne einer silizium-organischen oder fluor-organischen Hydrophobierung unterzogen werden.

3. Verfahren zur Herstellung eines Koaleszenzfilters nach Anspruch 1 durch mechanische Bearbeitung von synthetischen Kautschukprodukten auf Kordelbasis ausgewählt aus der Gruppe bestehend aus die verschlissene Motorreifen, Reifenhüllen, Förderbänder, Abfälle von Gummischläuchen und Antriebsriemen umfasst. **wobei** das Verfahren die folgenden Vorgänge umfasst:
a/ Herstellung eines Koaleszenzmediums (20) durch:
Bildung ein komprimierten Paket (30) aus benachbarten einzelnen Kautschukprodukten,
Bearbeiten des komprimierten Paket (30) durch die besagte mechanische Bearbeitung, ausgewählt aus der Gruppe bestehend aus Drehen, Bohren, Hobeln und Fräsen,
Bereitstellen einer gegenseitigen Rotations- und Translationsbewegung des Schneidwerkzeugs (36) in Bezug auf das besagte Paket (30) mit Parametern der gegenseitigen Rotations- und Translationsbewegung des Schneidwerkzeugs (36) in Bezug auf das besagte Paket (30), zum Erhalten eines Fließspiralspäne und/oder bandförmige Fließspäne sicherstellen, die eine longitudinale Oberflächenrauhigkeit im Bereich von 0,1 bis 20 um, eine Perforation über die gesamte Oberfläche, eine Dicke im Bereich von 0,05 mm bis 5 mm, eine Breite im Bereich von 0,05 mm bis 20 mm und einer Länge von mindestens 100 mm aufweisen,
b) Befüllen des Kammerhohlraums (11) mit dem Koaleszenzmedium (20).

4. Verfahren nach Anspruch 3, **wobei** die gebrauchten Motorreifen und Reifenhüllen in der diametralen Ebene geschnitten, gestapelt sind um ein Paket (30) zu bilden, gespannt und auf der Rotationsachse zwischen zwei Befestigungsscheiben (32) fixired sind.

5. Verfahren nach Anspruch 3, **wobei** die Förderbänder, Abfälle von Gummischläuchen und Antriebsriemen zu einem kompakten Zylinder gewickelt werden, um ein Paket (30) zu bilden, gespannt und auf der Rotationsachse zwischen zwei Befestigungsscheiben (32) fixiert sind.

6. Verfahren nach Anspruch 3, **wobei** das Schneidwerkzeug (36) ein Fräser oder ein Mühle oder ein Bohrer ist.

## Revendications

1. Filtre coalescent pour un système de séparation d'une dispersion eau/huile, comprenant une chambre (10) avec une entrée, une sortie et une cavité de la chambre (11) remplie d'au moins un milieu coalescent (20), **dans lequel** le milieu coalescent (20) ) comporte un produit obtenu par traitement mécanique de produits en caoutchouc à base de corde synthétique jusqu'à l'obtention de copeaux continus en spirale et/ou de copeaux continus rubanés qui ont une rugosité de surface longitudinale de dimension moyenne comprise entre 0,1 et 20 µm, une perforation sur toute la surface, une épaisseur comprise entre 0,05 mm et 5 mm, une largeur comprise entre 0,05 mm et 20 mm et une longueur d'au moins 100 mm, où le traitement mécanique est choisi dans le groupe comprenant le tournage, le forage, le rabotage et le fraisage, lesdits produits en caoutchouc à base de corde synthétique étant choisis dans le groupe comprenant des pneus de moteur usés, des enveloppes de pneu, des bandes transporteuses, des déchets issus de tuyaux flexibles en caoutchouc et des courroies d'entraînement.

2. Filtre coalescent selon la revendication 1, **dans lequel** lesdits copeaux sont soumis à une hydrophobisation silicium-organique ou fluor-organique.

3. Méthode de production d'un filtre coalescent selon la revendication 1 par traitement mécanique de produits en caoutchouc à base de corde synthétique, choisis dans le groupe comprenant des pneus de moteur usés, des enveloppes de pneu, des bandes transporteuses, des déchets issus de tuyaux flexibles en caoutchouc et des courroies d'entraînement, **dans lequel** la méthode comprenant les opérations suivantes:
a/ production du milieu coalescent (20) par:
formation d'un paquet comprimé (30) de produits en caoutchouc individuels adjacents,
traitement du paquet comprimé (30) par ledit traitement à la machine choisi dans le groupe comprenant le tournage, le forage, le rabotage et le fraisage,
fournir une fournir une rotation mutuelle et mouvement de translation de l'outil de coupe (36) par rapport audit paquet (30) à des paramètres **du** mutuel de rotation et de mouvement de translation de l'outil de coupe (36) par rapport audit paquet (30), assurant l'obtention de copeaux continus en spirale et/ou de copeaux continus rubanés qui ont une rugosité de surface longitudinale comprise entre 0,1 et 20 µm, une perforation sur toute la surface, une épaisseur comprise entre 0,05 mm et 5 mm, une largeur comprise entre 0,05 mm et 20 mm et une longueur d'au moins 100 mm,
b/ remplir la cavité de la chambre (11) avec le milieu coalescent (20).

4. Méthode selon la revendication 3, **dans lequel** les pneus de moteur et les enveloppes de pneu sont coupés dans un plan diamétral, empiles pour former un paquet (30), tendus et fixés sur l'axe de rotation entre deux disques de fixation (32).

5. Méthode selon la revendication 3, **dans lequel** les bandes transporteuses, les déchets issus de tuyaux flexibles en caoutchouc et les courroies d'entraînement sont enroulés en un cylindre compact pour former un paquet (30) fixé par serrage de l'axe de rotation entre deux disques de fixation (32).

6. Méthode selon la revendication 3, **dans lequel** l'outil de coupe (36) est un coupeur ou une fraise ou une perceuse.
